# EUROPÄISCHE PATENTSCHRIFT

(11) **EP 3 487 790 B1**
(45) Veröffentlichungstag und Bekanntmachung des Hinweises auf die Patenterteilung: **09.09.2020**
(21) Anmeldenummer: 17751635.8
(22) Anmeldetag: 18.07.2017
(51) Int. Cl.: B29C 51/08, B29C 49/04, B29C 48/00, B65D 90/08, B65D 88/76, E03F 5/10

(54) **ABWASSERBEHÄLTER, VERFAHREN ZU DESSEN HERSTELLUNG**
WASTE WATER CONTAINER, METHOD FOR THE PRODUCTION THEREOF
RÉSERVOIR D'EAUX USÉES ET SON PROCÉDÉ DE FABRICATION

(30) Priorität: 21.07.2016 DE 102016113442
(43) Veröffentlichungstag der Anmeldung: 29.05.2019
(73) Patentinhaber: Richter, Bodo, 57610 Altenkirchen (DE)
(72) Erfinder: RICHTER, Günter, 57610 Altenkirchen (DE)
(74) Vertreter: Schaumburg und Partner Patentanwälte mbB
(86) Internationale Anmeldenummer: PCT/EP2017/068106
(87) Internationale Veröffentlichungsnummer: WO 2018/015377

(56) Entgegenhaltungen:
- WO-A1-2004/026711
- DE-U1- 29 503 546
- US-A- 5 361 930
- US-B1- 8 740 005

## Beschreibung

Die Erfindung betrifft einen Behälter aus Kunststoff mit einem Aufnahmevolumen von 2000 bis 10000 Litern, insbesondere einen Abwasserbehälter. Ein solcher Behälter setzt sich aus einem oberen Behälterteil und einem unteren Behälterteil zusammen, die durch mehrere Klemmvorrichtungen entlang der Trennlinie der beiden Behälterteile dichtend miteinander verbunden sind. Weiterhin betrifft die Erfindung ein Verfahren zum Herstellen eines solchen Behälters.

Derartige ähnliche Behälter, jedoch mit kleinerem Fassungsvermögen sind aus dem Stand der Technik bekannt, wobei der Behälter aus zwei Behälterteilen im Kunststoff-Spritzgussverfahren hergestellt wird. Bei diesem Herstellverfahren wird an jedem Behälterteil ein Verbindungsflansch mitgeformt. Das Spritzgussverfahren bietet hier die Möglichkeit, an den Behälterteilen Verstärkungsrippen, unterschiedliche Wanddicken, Zentrierzapfen, etc. in einem Fertigungsgang auszubilden. Nachteilig ist, dass die Abmessungen der Behälterteile aus Gründen der Fertigungsmöglichkeiten mittels Spritzgussmaschinen deutlich auf geringe Fassungsvermögen begrenzt sind. Für große Volumenbereiche werden daher zwei gleich große Behälterteile gefertigt, die mittels Verbindungstechniken zusammengefügt werden. In diesem Falle befinden sich die Behälterflansche, an denen die beiden Behälterteile dichtend verbunden werden, stets im Flüssigkeitsbereich, so dass der Aufwand für eine flüssigkeitsdichte Verbindungstechnik relativ hoch ist. Weiterhin sind die Kosten für eine Spritzgussmaschine und für Spritzgusswerkzeuge hoch, was sich deutlich auf die Produktionskosten niederschlägt, insbesondere auch deshalb, weil für jeden herzustellenden Behälter zwei Arbeitsgänge erforderlich sind.

US 5 361 930 A bildet den nächstliegenden Stand der Technik und betrifft einen Abwasserbehälter aus Kunststoff mit einem oberen Behälterteil und einem unteren Behälterteil und mit einer Klemmvorrichtung, welche die beiden Behälterteile dichtend mit einander verbindet. Die Klemmvorrichtung umfasst einen unteren Flansch mit einer Ausnehmung, in welche eine Dichtung eingelegt ist. Weiterhin umfasst die Klemmvorrichtung einen oberen Flansch, der L-förmig ist und mit seinem kurzen Schenkel an der Stirnfläche des unteren Flansches anliegt. Ein U-förmiger Klemmbügel umgreift die Außenflächen des unteren Flansches und des oberen Flansches und klemmt die beiden Flansche dichtend aneinander.

US 8 740 005 B1 beschreibt einen Tank für Flüssigkeiten aus Kunststoff und umfasst einen oberen Behälterteil und einen unteren Behälterteil, die miteinander über ineinandergreifende Flansche verklemmt sind. Die beiderseitigen Flansche umfassen Taschen und Zapfen, die ineinandergreifen. Ein verschiebbarer Klemmbügel verklemmt die beiden Flansche.

DE 295 03 546 U1 betrifft einen Behälter zum Sammeln von Regenwasser umfassend ein Unterteil und ein Oberteil. Zwischen Flanschen am Unterteil und am Oberteil ist eine Dichtung angeordnet. Die Flansche werden durch Flanschschrauben dichtend miteinander verbunden.

WO 2004/026711 A1 beschreibt einen großvolumigen Behälter mit zwei Behälterteilen und einer Stützvorrichtung im Verbindungsbereich. Der Behälter besteht aus Polyethylen und ist durch Blasformen hergestellt.

Es ist Aufgabe der Erfindung, einen Behälter aus Kunststoff, insbesondere einen Abwasserbehälter, und ein Herstellverfahren hierzu anzugeben, welcher wirtschaftlich bei hoher Produktqualität einfach herstellbar bzw. das zugehörige Herstellverfahren sehr wirtschaftlich ist.

Diese Aufgabe wird für einen Behälter aus Kunststoff, insbesondere aus Polyethylen, durch die Merkmale des Anspruchs 1 gelöst. Vorteilhafte Weiterbildungen sind in den abhängigen Ansprüchen angegeben.

Der erfindungsgemäße Behälter aus Kunststoff hat ein Aufnahmevolumen von 2000 l bis 10000 l und setzt sich aus einem oberen Behälterteil und einem unteren Behälterteil zusammen. Mindestens eine Klemmvorrichtung, typischerweise mehrere, verbindet die beiden Behälterteile dichtend miteinander, wobei von der Behälterwand des einen Behälterteils ein umlaufendes vorstehendes L-Profil in ein ihm zugeordnetes umlaufendes U-Profil des anderen Behälterteils eintaucht.

Das L-Profil des einen Behälterteils und das U-Profil des anderen Behälterteils werden bei der Kunststoffformung mit geformt und bilden das wesentliche Verbindungselement für eine Flüssigkeitsdichtung. Die mindestens eine Klemmvorrichtung bzw. mehrere Klemmvorrichtungen fixieren die beiden Behälterteile, so dass eine stabile, qualitativ hochwertige Flüssigkeitsdichtung entsteht.

Die Klemmvorrichtung umfasst einen vorzugsweise U-förmigen Klemmbügel mit einem ersten Schenkel und einem zweiten Schenkel, wobei ein Ende des ersten Schenkels die Unterseite des L-Profils und ein Ende des zweiten Schenkels das U-Profil des anderen Behälterteils umgreift. Auf diese Weise werden durch die Klemmvorrichtung die beiden Behälterteile an ihren Flanschen in Ausrichtung zueinander fixiert.

Gemäß einer Weiterbildung ist zwischen dem L-Profil und dem U-Profil eine im Querschnitt U-förmige Dichtung oder eine Rundschnurdichtung oder eine O-förmige Ringdichtung angeordnet. Auf diese Weise wird beim Verklemmen mit der jeweiligen Klemmvorrichtung eine zuverlässige Flüssigkeitsdichtung geschaffen.

Vorteilhaft ist, wenn zwischen dem zweiten Schenkel und dem U-Profil ein relativ zum U-Profil verschiebbares Klemmelement, vorzugsweise ein Winkelprofil angeordnet ist, wobei das Klemmelement eine keilförmige Klemmfläche besitzt, die mit einer am zweiten Schenkel ausgebildeten keilförmigen Klemmfläche zum Verklemmen zusammenwirkt. Auf diese Weise kann durch Verschieben des Klemmelements bzw. des Winkelprofils eine Klemmkraft eingestellt werden, die sicherstellt, dass die beiden Behälterteile flüssigkeitsdicht miteinander verbunden sind.

In einer anderen Variante kann die Unterseite des umlaufenden L-Profils mindestens eine Ausformung, praktischerweise mehrere Ausformungen in vorbestimmten Abständen entlang dem L-Profil, mit jeweils einer keilförmigen Klemmfläche aufweisen, die mit einer keilförmigen Klemmfläche beim Klemmen zusammenwirkt, die an der Innenseite des ersten Schenkels des Klemmbügels ausgebildet ist. Bei einem Verschieben der Klemmvorrichtung in Umfangrichtung wird somit eine Klemmkraft eingestellt, die eine qualitativ hochwertige Flüssigkeitsabdichtung bewerkstelligt.

Vorteilhaft ist es, wenn beide Behälterteile durch Blasformen, Rotationsformen oder Thermoformen (Kunststoff-Tiefzieherverfahren) hergestellt sind. Hierbei können beide Behälterteile mit großem Fassungsvermögen in einem einzigen Arbeitsgang gleichzeitig hergestellt werden.

Gemäß einem weiteren Aspekt der Erfindung wird ein Blasformverfahren gemäß Anspruch 17 zum Herstellen eines Behälters aus Kunststoff, insbesondere eines Abwasserbehälters, angegeben. Dieses Herstellverfahren, bei dem der obere Behälterteil und der untere Behälterteil gleichzeitig in einer einzigen Blasform hergestellt werden, ist in einem hohen Maße wirtschaftlich und gestattet die Herstellung eines großvolumigen Behälters. Die mit diesem Herstellverfahren erzielbaren technischen Vorteile stimmen mit denen überein, die weiter vorne in Zusammenhang mit dem Behälter aus Kunststoff bereits genannt sind.

Ausführungsbeispiele der Erfindung werden nachfolgend anhand der Figuren erläutert. In diesen Figuren zeigt:
- Figur 1: einen Abwasserbehälter in einer Vorderansicht,
- Figur 2: den Abwasserbehälter nach Figur 1 in einer Seitenansicht;
- Figur 3: eine Draufsicht auf den Behälter nach Figur 1,
- Figur 4: eine Schnittdarstellung einer Klemmvorrichtung, welche Abschnitte des Unterbehälter mit Abschnitten des Oberbehälters verbindet,
- Figur 5: eine Variante einer Klemmvorrichtung,
- Figur 6: eine Vorderansicht auf die Klemmvorrichtung im Zusammenwirken mit einem Winkelprofil,
- Figur 7: eine Variante für das Verklemmen für Unterbehälter und Oberbehälter unter Verwendung von Ausformungen,
- Figur 8: eine Variante für das U-Profil und das L-Profil mit einer Rundschnurdichtung
- Figur 9: eine Variante mit einem O-Ring als Dichtung,
- Figur 10: eine Variante mit einer rechteckförmigen Rundschnur,
- Figur 11: ein schematisches Schaubild zur Erläuterung des Blasformens, und
- Figur 12: eine Detailansicht mit L-Profil, U-Profil und einem Formabfall.

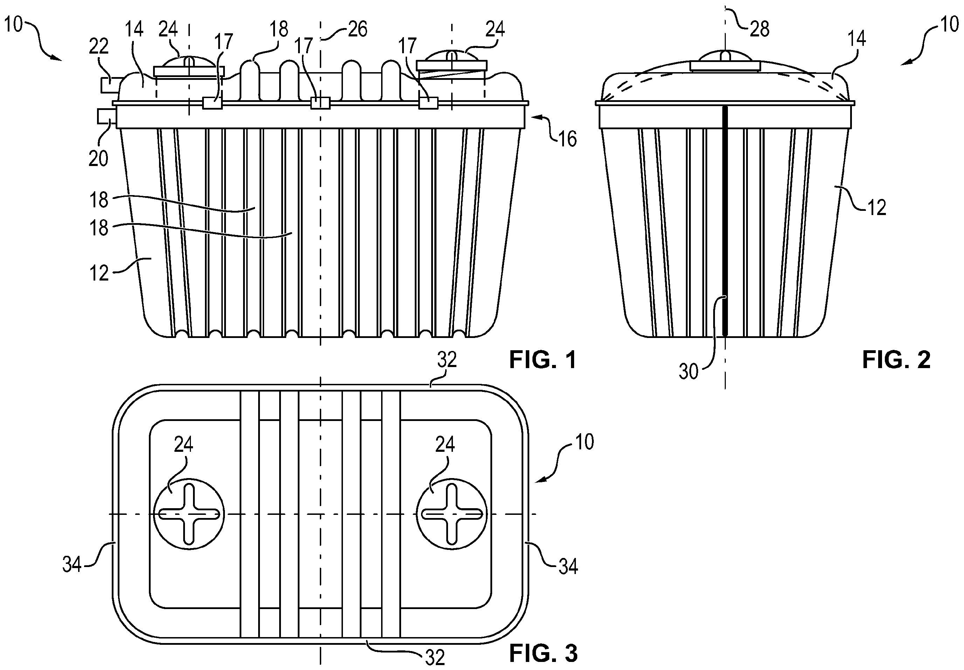

Figur 1 zeigt einen Behälter 10 in einer Vorderansicht, der als Abwasserbehälter genutzt wird und im Gebrauchszustand beispielsweise auch unsichtbar im Erdreich eingegraben sein kann. Der Behälter 10 setzt sich aus einem Unterbehälter 12 und einem Oberbehälter 14 zusammen, die in einem Flanschbereich 16 mittels mehrerer Klemmvorrichtungen 17 wasserdicht miteinander verbunden sind. Der Behälter 10 umfasst Versteifungssicken 18, die die mechanische Stabilität des Behälters 10 aus Kunststoffmaterial, vorzugsweise Polyethylen, verbessern. Der Flüssigkeitsspiegel im Gebrauchszustand des Behälters 10 liegt unterhalb des Flansches 16. Unterhalb dieses Flansches 16 ist im Unterbehälter 12 ein Überlaufelement 20 und oberhalb des Flansches 16 ein Zulaufelement 22 im Oberbehälter 14 angeordnet. Im Oberbehälter 14 sind weiterhin Verschlusselemente 24 vorgesehen, die Öffnungen im Oberbehälter 14 verschließen. Der Behälter 10 ist entlang einer Symmetrielinie 26 seitensymmetrisch aufgebaut.

Figur 2 zeigt den Behälter nach Figur 1 in der Seitenansicht. Gleiche Elemente haben darin und auch in den weiteren Figuren gleiche Bezugszeichen. Der Behälter 10 wird bevorzugt im Blasformverfahren hergestellt, wobei entlang der Symmetrielinie 28 ein Quetschrand 30 entlang der Schmalseite des Unterbehälters 12 verläuft.

Figur 3 zeigt eine Draufsicht auf den Behälter 10 nach den Figuren 1 und 2. Der Unterbehälter 12 umfasst konisch verlaufende Längswände 32 und konisch verlaufende Seitenwände 34.

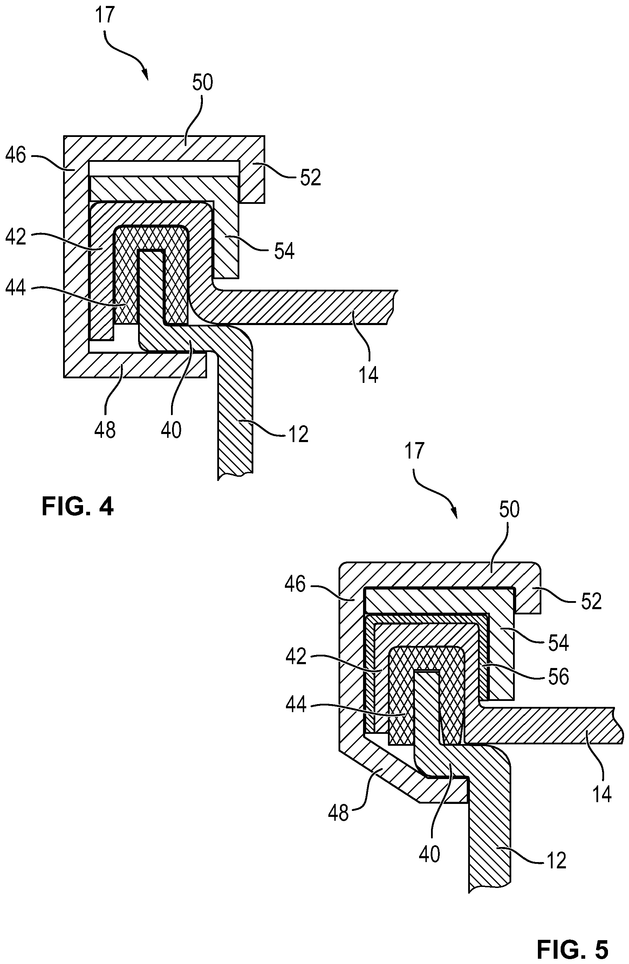

Figur 4 zeigt eine Schnittdarstellung der Klemmvorrichtung 17, welche Abschnitte des Unterbehälters 12 mit Abschnitten des Oberbehälters 14 verbindet. Die Behälterwand des Unterbehälters 12 endet in einem umlaufenden vorstehenden L-Profil 40 und die Behälterwand des Oberbehälters 14 endet in einem umlaufenden U-Profil 42. Zwischen dem L-Profil 40 und dem U-Profil 42 ist eine U-förmige Dichtung 44 angeordnet. Die Klemmvorrichtung 17 umfasst einen U-förmigen Klemmbügel 46 mit einem ersten Schenkel 48, dessen Ende die Unterseite des L-Profils 40 untergreift. Ein zweiter Schenkel 50 des Klemmbügels 46 übergreift mit seinem Ende das U-Profil 42 des Oberbehälters 14. Am Ende des Schenkels 50 ist eine Nasenrippe 52 ausgebildet, die ein zwischen dem U-Profil 42 und dem Klemmbügel 46 angeordnetes Winkelprofil 54 übergreift, das als Klemmelement dient. Das Winkelprofil 54 liegt mit seiner Innenfläche am U-Profil 42 an dessen Basis und einem der Schenkel an.

Figur 5 zeigt eine Variante, bei der der Klemmbügel 46 von der U-Form abweicht, indem der zweite Schenkel 48 weit geöffnet ist, um die Unterseite des L-Profils 40 zu unterstützen. Das U-Profil 42 ist überdeckt von einem Verstärkungsprofil 56 aus Kunststoff oder Metall und erhöht so die mechanische Stabilität beim Verklemmen mit Hilfe des Winkelprofils 54.

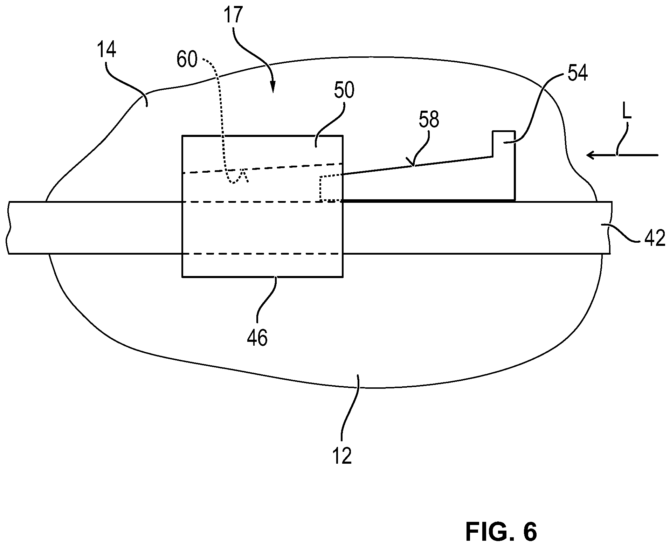

Figur 6 zeigt eine Vorderansicht auf die Klemmvorrichtung 17 und veranschaulicht den Klemmvorgang unter Einsatz des Winkelprofils 54 in Verbindung mit Figur 4. Das Winkelprofil 54 hat eine keilförmige Klemmfläche 58, die mit einer am Schenkel 50 ausgebildeten keilförmigen Klemmfläche 60 beim Verschieben des Winkelprofils 54 in Richtung L beim Verklemmen zusammenwirkt. Die Unterseite des Winkelprofils 54 drückt dabei gegen die Basis des U-Profils 42.

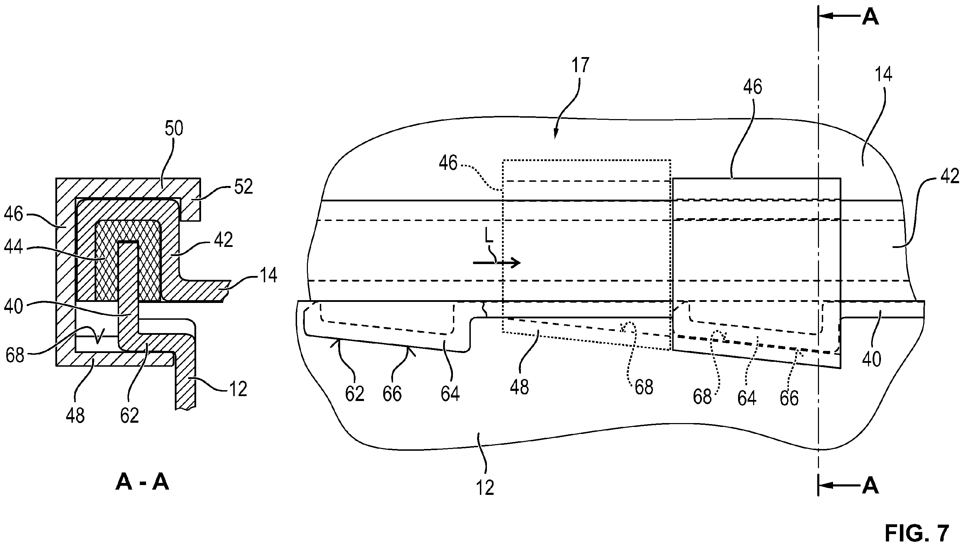

Die Figur 7 zeigt eine Variante für das Verklemmen von Unterbehälter 12 und Oberbehälter 14. In der Figur 7 ist links ein Schnittbild und rechts eine Vorderansicht auf die Klemmvorrichtung 17 dargestellt. Die Unterseite 62 des L-Profils 40 umfasst in vorgegebenen Abständen Ausformungen 64 mit keilförmigen Klemmflächen 66. Diese Klemmflächen 66 wirken mit einer keilförmigen Klemmfläche 68 zusammen, die an der Innenseite des Schenkels 48 des Klemmbügels 46 ausgebildet ist. Zum Verklemmen wird der Klemmbügel 46 in Längsrichtung L verschoben, wobei mittels der schrägen Rampen der Klemmflächen 66 und 68 die Verklemmung erfolgt. Die konischen Ausformungen 64 sind in Abständen voneinander vorhanden, die größer sind als die Länge der jeweiligen Klemmvorrichtung 17, wobei auch die Länge der jeweiligen Ausformung 64 größer ist als die Länge der Klemmvorrichtung 17.

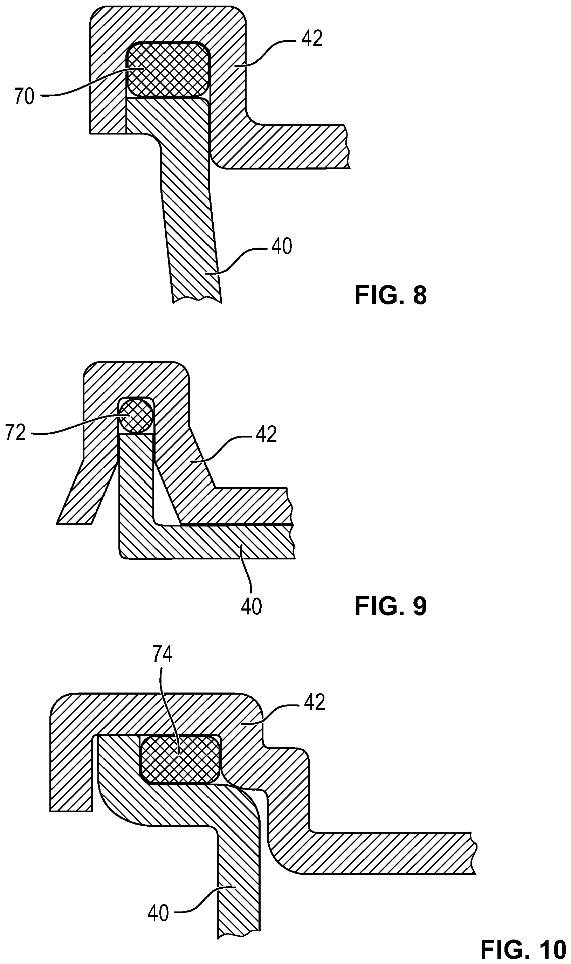

Figuren 8 bis 10 zeigen Varianten für das U-Profil 42 und das L-Profil 40 sowie die zwischen beiden angeordneten Dichtungen. In Figur 8 ist eine Rundschnurdichtung 70 mit rechteckigem Querschnitt dargestellt. Das L-Profil 40 taucht mit seinem Ende in das U-Profil 42 ein. In Figur 9 hat das U-Profil 42 im Querschnitt eine maulförmige Öffnung, in welche das Ende des L-Profils eintaucht. Zwischen L-Profil 40 und U-Profil 42 ist ein O-Ring 72 zur Dichtung angeordnet. In Figur 10 weist das U-Profil 42 eine Kröpfung im Querschnitt auf. Das L-Profil 40 ragt in diese Kröpfung und mit einem umgebogenen Endabschnitt in die U-Form des U-Profils 42. Zwischen U-Profil 42 und L-Profil 40 ist eine im Querschnitt rechteckförmige Rundschnur 74 angeordnet.

Der Behälter 10 kann durch Kunststoff-Rotationsformen, durch Thermoformen oder durch Blasformen hergestellt werden. Beim Rotationsformen wird in einer Hohlkörperform pulverförmiges Thermoplast erwärmt, wobei sich Kunststoffschicht um Kunststoffschicht an den Innenflächen der Hohlkörperform ablagert. Auf diese Weise können Hohlkörper mit Volumina bis 6000 l hergestellt werden.

Beim Kunststoff-Thermoformen (auch Warmformen, Tiefziehen oder Vakuum-Tiefziehen genannt) wird Rollenware oder Plattenware aus Kunststoff durch Thermoformen in die gewünschte Form gebracht, wobei Oberbehälter und Unterbehälter getrennt voneinander hergestellt und später mit Hilfe der Klemmvorrichtungen dichtend zusammengesetzt werden.

Besonders vorteilhaft ist die Herstellung des Behälters im Kunststoff-Blasformen und insbesondere durch Extrusions-Blasformen. Hierbei wird durch Extrusion ein schlauchförmiger Vorformling erzeugt, der in eine Blasform übergeben und dort durch Innendruck und/oder Vakuum an die Innenkonturen der Blasform angepasst. Ein wesentliches Kennzeichen ist eine Quetschnaht des so hergestellten Hohlkörpers.

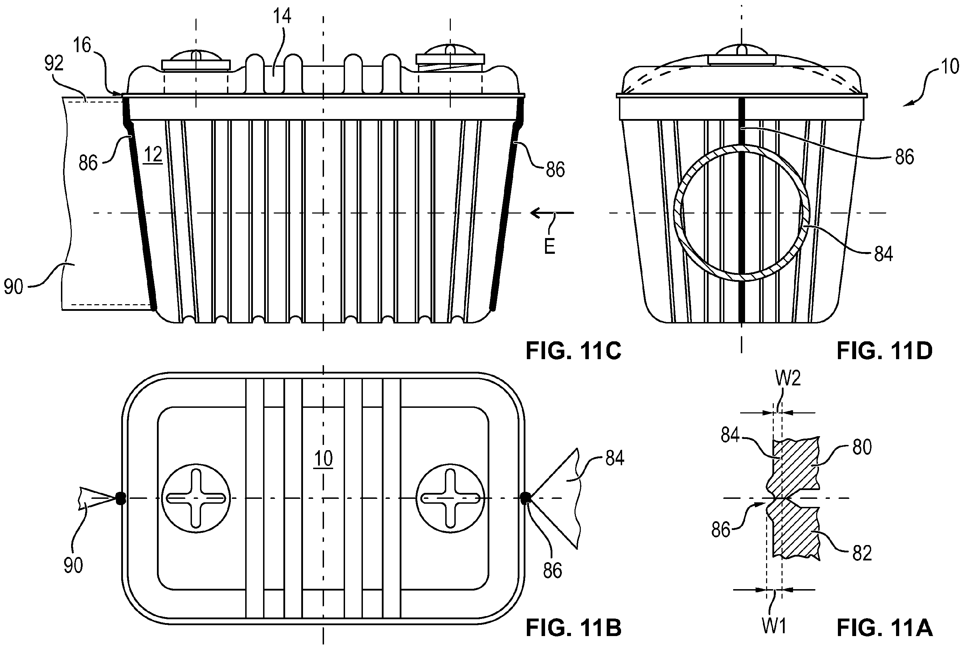

Figur 11 zeigt in einem schematischen Schaubild mit Teilabschnitten A, B, C, D das Blasformen des Behälters 10, wobei gleichzeitig Unterbehälter 12 und Oberbehälter 14 in einer zweiteiligen Blasform hergestellt werden. In der Teildarstellung A ist eine linke Blasformhälfte 80 und eine rechte Blasformhälfte 82 in einem Querschnitt im geschlossenen Zustand dargestellt. Der in der Blasform enthaltene Vorformling 84 bildet an der Trennstelle zwischen den Formhälften 80, 82 eine Quetschnaht 86 aus. Diese Quetschnaht 86 hat eine Dicke W1, die größer ist als die Wanddicke W2, die sonst die übliche Wanddicke des geblasenen Artikels ist.

In der Teildarstellung B ist zu erkennen, dass nach dem Abquetschen des Vorformlings 84 ein oberer Butzen 88 und ein unterer Butzen 90 am Behälter 10 vorhanden sind, die als Restmaterial vom Behälter 10 abgeschnitten werden. Es verbleibt in diesem Bereich eine Verdickung, die Quetschnaht (auch Pinch-Line genannt). In der Teildarstellung C ist der Behälter in der Seitenansicht mit der unteren Quetschnaht 86 bzw. der oberen Quetschnaht 86 in Bezug auf die Extrusionsrichtung E dargestellt. Die Länge der Quetschnaht 86 ist so bemessen, dass sie im späteren Flanschbereich 16, also an der Trennlinie von Unterbehälter 12 und Oberbehälter 14 endet (vgl. auch Figur 1).

In der Teildarstellung D ist der Behälter 10 in einer Vorderansicht seiner Schmalseite dargestellt. Eingezeichnet ist auch der im Querschnitt schlauchförmige Vorformling 84, wie er den Formhälften 80, 82 zugeführt wird, wobei sich durch das Abquetschen die Quetschnaht 86 an den schmalen Stirnflächen ausbildet (siehe auch Figur 2).

Nach dem Erkalten des Behälters 10 in den Formhälften 80, 82, werden die Formhälften 80, 82 geöffnet, der Blaskörper entnommen und entlang einer Trennlinie 92 am Flansch 16 in die separaten Unterbehälter 12 und Oberbehälter 14 aufgetrennt und später mit Hilfe der Klemmvorrichtungen 17 flüssigkeitsdicht miteinander verbunden.

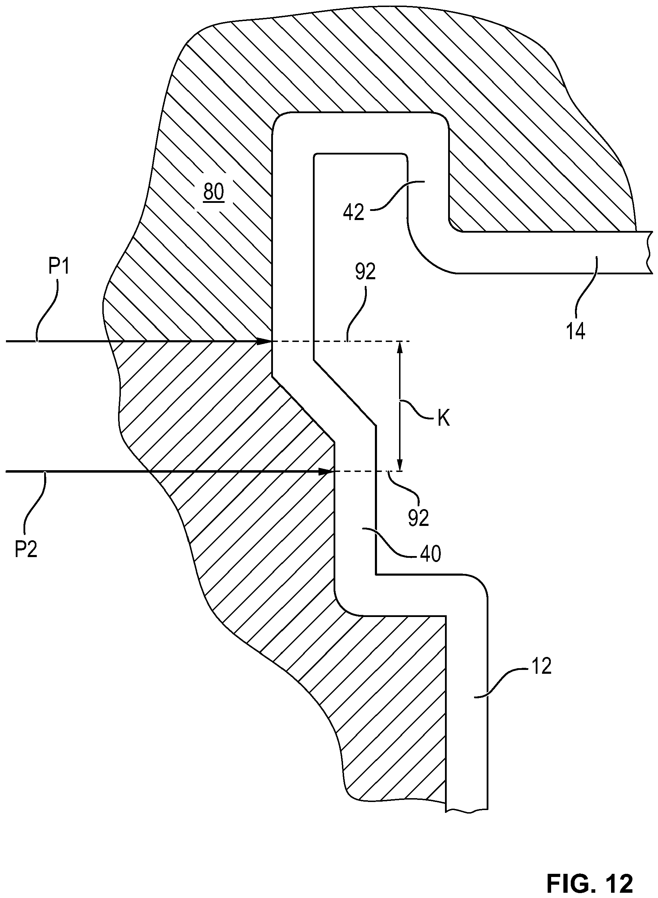

Figur 12 zeigt in einer Detailansicht einen Schnitt durch die Formhälfte 80 im Trennbereich zwischen Oberbehälter 14 und Unterbehälter 12. Durch Blasformen passt sich das Kunststoffmaterial des Formformlings 84 an die Innenkontur der Formhälfte 80 an und bildet das umlaufende U-Profil 42 und das umlaufende L-Profil 40 aus. Nach der Entnahme der Behälterteile 12, 14 aus den Formhälften 80, 82 wird nach Abtrennen das ringförmige Kunststoffmaterial K entlang den Pfeilen P1, P2 entfernt und als Formabfall wie auch die Butzen 88, 90 gemahlen und der Wiederverwendung zugeführt.

### Bezugszeichenliste

- 10: Behälter
- 12: Unterbehälter
- 14: Oberbehälter
- 16: Flanschbereich
- 17: Klemmvorrichtung
- 18: Versteifungssicken
- 20: Überlaufelement
- 22: Zulaufelement
- 24: Verschlusselemente
- 26: Symmetrielinie
- 28: Symmetrielinie
- 30: Quetschrand
- 32: Längswände
- 34: Seitenwände
- 40: L-Profil
- 42: U-Profil
- 44: U-förmige Dichtung
- 46: Klemmbügel
- 48: erster Schenkel
- 50: zweiter Schenkel
- 52: Nasenrippe
- 54: Winkelprofil
- 58: keilförmige Klemmfläche
- 60: keilförmige Klemmfläche
- 62: Unterseite des L-Profils
- 64: Ausformungen
- 66: keilförmige Klemmfläche
- 68: keilförmige Klemmfläche
- 70: Rundschnurdichtung
- 72: O-Ring
- 74: rechteckförmige Rundschnur
- 80: linke Blasformhälfte
- 82: rechte Blasformhälfte
- 84: Vorformling
- 86: Quetschnaht
- W1: Dicke der Quetschnaht
- W2: Wanddicke des geblasenen Artikels
- 88: oberer Butzen
- 90: unterer Butzen
- E: Extrusionsrichtung
- L: Längsrichtung
- K: Kunststoffmaterial als Formabfall
- P1, P2: Pfeile

## Patentansprüche

1. Behälter (10) aus Kunststoff, insbesondere einen Abwasserbehälter,
mit einem oberen Behälterteil (14) und einem unteren Behälterteil (12) und mindestens einer Klemmvorrichtung (17), die die beiden Behälterteile (12, 14) dichtend miteinander verbindet und einen Klemmbügel (46) mit einem ersten Schenkel (48) und einem zweiten Schenkel (50) umfasst,
**dadurch gekennzeichnet, dass**
ein von der Behälterwand des einen Behälterteils (12) umlaufendes vorstehendes L-Profil (40) in ein ihm zugeordnetes umlaufendes U-Profil (42) des anderen Behälterteils (14) eintaucht,
und dass ein Ende des ersten Schenkels (48) des Klemmbügels (46) die Unterseite des L-Profils (40) des einen Behälterteils (12) und ein Ende des zweiten Schenkels (50) des Klemmbügels (46) das U-Profil (42) des anderen Behälterteils (14) umgreifen, wobei der Behälter ein Aufnahmevolumen von 2000 bis 10000l aufweist.

2. Behälter (10) nach Anspruch 1, **dadurch gekennzeichnet, dass** eine im Querschnitt U-förmige Dichtung (44) oder eine Rundschnurdichtung (70) oder eine O-Ringdichtung (72) zwischen dem L-Profil (40) und dem U-Profil (42) angeordnet ist.

3. Behälter 10 nach Anspruch 1 oder 2, **dadurch gekennzeichnet, dass** der Klemmbügel (46) U-förmig ausgebildet ist.

4. Behälter (10) nach einem der Ansprüche 1 bis 3, **dadurch gekennzeichnet, dass** zwischen dem zweiten Schenkel (50) und dem U-Profil (42) ein Klemmelement (54) relativ zum U-Profil (42) verschiebbar angeordnet ist, wobei das Klemmelement (54) eine keilförmige R 16004 P
Klemmfläche (58) besitzt, die mit einer am zweiten Schenkel (50) ausgebildeten keilförmigen Klemmfläche (60) zum Verklemmen zusammenwirkt.

5. Behälter (10) nach einem der Ansprüche 1 bis 3, **dadurch gekennzeichnet, dass** die Unterseite (62) des L-Profils (40) mindestens eine Ausformung (64) mit einer keilförmigen Klemmfläche (66) aufweist, die mit einer keilförmigen Klemmfläche (68) beim Verklemmen zusammenwirkt, die an der Innenseite des ersten Schenkels (48) des Klemmbügels (46) ausgebildet ist.

6. Behälter (10) nach einem der vorhergehenden Ansprüche, **dadurch gekennzeichnet, dass** zwischen Klemmvorrichtung (17) und U-Profil (42) ein Verstärkungsmaterial (56) aus Kunststoff oder Metall vorhanden ist.

7. Behälter (10) nach einem der vorhergehenden Ansprüche, **dadurch gekennzeichnet, dass** als Kunststoff Polyäthylen vorgesehen ist.

8. Behälter (10) nach einem der vorhergehenden Ansprüche, **dadurch gekennzeichnet, dass** beide Behälterteile (12, 14) durch Blasformen, Rotationsformen oder Thermoformen hergestellt sind.

9. Behälter (10) nach einem der vorhergehenden Ansprüche, **dadurch gekennzeichnet, dass** die beiden Behälterteile einen Unterbehälter (12) und einen Oberbehälter (14) bilden, wobei der Unterbehälter (12) konisch verlaufende Längswände (32) und konisch verlaufende Seitenwände (34) aufweist.

10. Behälter (10) nach Anspruch 9, **dadurch gekennzeichnet, dass** die Konizität der beiden Seitenwände (34) des Unterbehälters größer ist als die Konizität der beiden Längswände (32) des Unterbehälters.

11. Behälter (10) nach einem der vorhergehenden Ansprüche, **dadurch gekennzeichnet, dass** das L-Profil (40) am Unterbehälter (12) ausgebildet ist und im Gebrauch des Behälters (10) sich oberhalb des Flüssigkeitsspiegels im Behälter (10) befindet.

12. Behälter (10) nach einem der vorhergehenden Ansprüche, **dadurch gekennzeichnet, dass** ein Zulauf (22) im oberen Behälterteil (14) angeordnet ist.

13. Behälter (10) nach einem der vorhergehenden Ansprüche, **dadurch gekennzeichnet, dass** ein Überlauf (20) für eine im Behälter (10) befindliche Flüssigkeit unterhalb des L-Profils (40) angeordnet ist.

14. Behälter (10) nach einem der vorhergehenden Ansprüche, **dadurch gekennzeichnet, dass** der obere Behälterteil (14) zusammen mit dem unteren Behälterteil (12) im Blasformverfahren in einem einzigen Arbeitsgang gefertigt werden.

15. Behälter (10) nach Anspruch 14, **dadurch gekennzeichnet, dass** der Quetschrand (30) des im Blasformverfahren hergestellten Behälters (10) an dem unteren Behälterteil (12) auf den beiden Schmalseiten (34) angeordnet ist.

16. Behälter (10) nach Anspruch 15, **dadurch gekennzeichnet, dass** der Quetschrand (30) unterhalb des L-Profils (40) des unteren Behälterteils (12) endet.

17. Verfahren zum Herstellen eines Behälters (10) nach einem der Ansprüche 1-16 aus Kunststoff mit einem Aufnahmevolumen von 2000 bis 10000 l durch Blasformen,
insbesondere eines Abwasserbehälters,
bei dem ein schlauchförmiger Vorformling (84) extrudiert wird, der in einer mindestens zweiteiligen Blasform (80, 82) zu einem oberen Behälterteil (14) und einem unteren Behälterteil (12) geformt wird,
an der Behälterwand des einen Behälterteils (12) ein umlaufendes vorstehendes L-Profil (40) und ein ihm zugeordnetes umlaufendes U-Profil (42) am anderen Behälterteil (14) ausgeformt wird,
und bei dem nach dem Blasformen beide Behälterteile (12, 14) der Blasform (80, 82) entnommen werden und die beiden Behälterteile (12, 14) zum Behälter zusammengesetzt werden,
wobei das L-Profil (40) des einen Behälterteils (12) in das U-Profil (42) des anderen Behälterteils (14) eintaucht.

18. Verfahren nach Anspruch 17, **dadurch gekennzeichnet, dass** eine im Querschnitt U-förmige Dichtung (44) oder eine Rundschnurdichtung (70) oder eine O-Ringdichtung (72) zwischen dem L-Profil (40) und dem U-Profil (42) angeordnet wird.

19. Verfahren nach Anspruch 17 oder 18, **dadurch gekennzeichnet, dass** mehrere Klemmvorrichtungen (17) die beiden Behälterteile (12, 14) miteinander dichtend verbinden.

## Claims

1. A container (10) made of plastic,
in particular a waste water container,
with an upper container part (14) and a lower container part (12) and at least one clamping device (17) connecting the two container parts (12, 14) to one another in a sealing manner, and comprising a clamping bracket (46) with a first leg (48) and a second leg (50),
**characterized in that**
a circumferential L section (40) projecting from the container wall of the one container part (12) penetrates into a circumferential U section (42) of the other container part (14) associated thereto,
and that an end of the first leg (48) of the clamping bracket (46) encompasses the underside of the L section (40) of the one container part (12) and an end of the second leg (50) of the clamping bracket (46) encompasses the U section (42) of the other container part (14), the container having a receiving volume of 2000 to 10000 I.

2. The container (10) according to claim 1, **characterized in that** a sealing (44) having a U-shape in cross-section or a toroidal sealing (70) or an O-ring sealing (72) is arranged between the L section (40) and the U section (42).

3. The container (10) according to claim 1 or 2, **characterized in that** the clamping bracket (46) is U-shaped.

4. The container (10) according to one of the claims 1 to 3, **characterized in that** between the second leg (50) and the U section (42) a clamping element (54) is arranged movably relative to the U section (42), wherein the clamping element (54) has a wedge-shaped clamping surface (58) interacting for clamping with a wedge-shaped clamping surface (60) formed on the second leg (50).

5. The container (10) according to one of the claims 1 to 3, **characterized in that** the underside (62) of the L section (40) has at least one projection (64) with a wedge-shaped clamping surface (66) which upon clamping interacts with a wedge-shaped clamping surface (68) formed on the inside of the first leg (48) of the clamping bracket (46).

6. The container (10) according to one of the preceding claims, **characterized in that** a reinforcing material (56) made of plastic or metal is present between the clamping device (17) and the U section (42).

7. The container (10) according to one of the preceding claims, **characterized in that** polyethylene is provided as plastic material.

8. The container (10) according to one of the preceding claims, **characterized in that** both container parts (12, 14) are produced by blow molding, rotational molding or thermoforming.

9. The container (10) according to one of the preceding claims, **characterized in that** the two container parts form a lower container (12) and an upper container (14), wherein the lower container (12) has conically extending longitudinal walls (32) and conically extending side walls (34).

10. The container (10) according to claim 9, **characterized in that** the taper of the two sidewalls (34) of the lower container is greater than the taper of the two longitudinal walls (32) of the lower container.

11. The container (10) according to one of the preceding claims, **characterized in that** the L section (40) is formed on the lower container (12) and is situated above the liquid level in the container (10) when the container (10) is in use.

12. The container (10) according to one of the preceding claims, **characterized in that** a feed (22) is arranged in the upper container part (14).

13. The container (10) according to one of the preceding claims, **characterized in that** an overflow (20) for a liquid present in the container (10) is arranged below the L section (40).

14. The container (10) according to one of the preceding claims, **characterized in that** the upper container part (14) is produced together with the lower container part (12) in one single operation by a blow molding process.

15. The container (10) according to claim 14, **characterized in that** the pinch-off seam (30) of the container (10) produced by the blow molding process is arranged on the lower container part (12) on the two narrow sides (34).

16. The container (10) according to claim 15, **characterized in that** the pinch-off seam (30) terminates below the L section (40) of the lower container part (12).

17. A method for producing a container (10) according to one of the claims 1 to 16, made of plastic, with a receiving volume of 2000 to 10000 I by blow molding,
in particular a waste water container,
in which a tubular preform (84) is extruded which is formed in an at least two-part blow mold (80, 82) into an upper container part (14) and a lower container part (12),
on the container wall of the one container part (12) a circumferential projecting L section (40) is formed and an associated circumferential U section (42) is formed on the other container part (14),
and in which after blow molding both container parts (12, 14) are taken from the blow mold (80, 82) and the two container parts (12, 14) are assembled to form the container,
wherein the L section (40) of the one container part (12) engages into the U section (42) of the other container part (14).

18. The method (10) according to claim 17, **characterized in that** a sealing (44) that is U-shaped in cross-section or a toroidal sealing (70) or an O-ring sealing (72) is arranged between the L section (40) and the U section (42).

19. The method (10) according to claim 17 or 18, **characterized in that** several clamping devices (17) connect the two container parts (12, 14) to each other in a sealing manner.

## Revendications

1. Réservoir (10) en matière plastique,
en particulier réservoir d'eaux usées,
avec une partie de réservoir supérieure (14) et une partie de réservoir inférieure (12) et au moins un dispositif de serrage (17), qui relie les deux parties de réservoir (12, 14) l'une à l'autre de manière étanche et un étrier de serrage (46) avec une première branche (48) et une deuxième branche (50),
**caractérisé en ce que**
un profilé en L (40) périphérique faisant saillie de la paroi de réservoir d'une des parties de réservoir (12) s'enfonce dans un profilé en U (42), associé à celui-ci, de l'autre partie de réservoir (14),
et qu'une extrémité de la première branche (48) de l'étrier de serrage (46) entoure la face inférieure du profilé en L (40) d'une des parties de réservoir (12) et une extrémité de la deuxième branche (50) de l'étrier de serrage (46) entoure le profilé en U (42) de l'autre partie de réservoir (14), dans lequel le réservoir présente un volume de réception de 2 000 à 10 000 l.

2. Réservoir (10) selon la revendication 1, **caractérisé en ce qu'**un joint (44) en forme de U en section transversale ou un joint torique (70) ou un anneau d'étanchéité torique (72) est disposé entre le profilé en L (40) et le profilé en U (42).

3. Réservoir (10) selon la revendication 1 ou 2, **caractérisé en ce que** l'étrier de serrage (46) est réalisé en forme de U.

4. Réservoir (10) selon l'une quelconque des revendications 1 à 3, **caractérisé en ce qu'**un élément de serrage (54) est disposé de manière coulissante par rapport au profilé en U (42) entre la deuxième branche (50) et le profilé en U (42), dans lequel l'élément de serrage (54) possède une surface de serrage (58) cunéiforme, qui coopère avec une surface de serrage (60) cunéiforme réalisée sur la deuxième branche (50) aux fins de serrage.

5. Réservoir (10) selon l'une quelconque des revendications 1 à 3, **caractérisé en ce que** la face inférieure (62) du profilé en L (40) présente au moins une partie saillante (64) avec une surface de serrage (66) cunéiforme, qui coopère avec une surface de serrage (68) cunéiforme aux fins de serrage, qui est réalisée sur la face intérieure de la première branche (48) de l'étrier de serrage (46).

6. Réservoir (10) selon l'une quelconque des revendications précédentes, **caractérisé en ce qu'**un matériau de renforcement (56) en matière plastique ou métal est présent entre le dispositif de serrage (17) et le profilé en U (42).

7. Réservoir (10) selon l'une quelconque des revendications précédentes, **caractérisé en ce que** du polyéthylène est prévu comme matière plastique.

8. Réservoir (10) selon l'une quelconque des revendications précédentes, **caractérisé en ce que** les deux parties de réservoir (12, 14) sont fabriquées par moulage par soufflage, rotomoulage ou thermoformage.

9. Réservoir (10) selon l'une quelconque des revendications précédentes, **caractérisé en ce que** les deux parties de réservoir forment un réservoir inférieur (12) et un réservoir supérieur (14), dans lequel le réservoir inférieur (12) présente des parois longitudinales (32) s'étendant de manière conique et des parois latérales (34) s'étendant de manière conique.

10. Réservoir (10) selon la revendication 9, **caractérisé en ce que** la conicité des deux parois latérales (34) du réservoir inférieur est plus grande que la conicité des deux parois longitudinales (32) du réservoir inférieur.

11. Réservoir (10) selon l'une quelconque des revendications précédentes, **caractérisé en ce que** le profilé en L (40) est réalisé sur le réservoir inférieur (12) et, pendant l'utilisation du réservoir (10), se trouve au-dessus du niveau de liquide dans le réservoir (10) .

12. Réservoir (10) selon l'une quelconque des revendications précédentes, **caractérisé en ce qu'**une arrivée (22) est disposée dans la partie de réservoir supérieure (14).

13. Réservoir (10) selon l'une quelconque des revendications précédentes, **caractérisé en ce qu'**un trop-plein (20) pour un liquide se trouvant dans le réservoir (10) est disposé au-dessous du profilé en L (40).

14. Réservoir (10) selon l'une quelconque des revendications précédentes, **caractérisé en ce que** la partie de réservoir supérieure (14) est fabriquée conjointement avec la partie de réservoir inférieure (12) en une seule opération au cours du procédé de moulage par soufflage.

15. Réservoir (10) selon la revendication 14, **caractérisé en ce que** le bord d'écrasement (30) du réservoir (10) fabriqué au cours du procédé de moulage par soufflage est disposé sur la partie de réservoir inférieure (12) sur les deux petits côtés (34).

16. Réservoir (10) selon la revendication 15, **caractérisé en ce que** le bord d'écrasement (30) termine au-dessous du profilé en L (40) de la partie de réservoir inférieure (12).

17. Procédé de fabrication d'un réservoir (10) selon l'une quelconque des revendications 1-16 en matière plastique avec un volume de réception de 2 000 à 10 000 l par moulage par soufflage,
en particulier d'un réservoir d'eaux usées,
où une préforme tubulaire (84), qui est formée dans un moule de soufflage (80, 82) au moins en deux parties en une partie de réservoir supérieure (14) et en une partie de réservoir inférieure (12), est extrudée,
un profilé en L (40) périphérique en saillie est formé sur la paroi de réservoir d'une des parties de réservoir (12) et un profilé en U (42) périphérique associé à celui-ci, sur l'autre partie de réservoir (14),
et où, après le moulage par soufflage, les deux parties de réservoir (12, 14) du moule de soufflage (80, 82) sont retirées et les deux parties de réservoir (12, 14) sont réunies en le réservoir,
dans lequel le profilé en L (40) d'une des parties de réservoir (12) s'enfonce dans le profilé en U (42) de l'autre partie de réservoir (14).

18. Procédé selon la revendication 17, **caractérisé en ce qu'**un joint (44) en forme de U en section transversale ou un joint torique (70) ou un anneau d'étanchéité torique (72) est disposé entre le profilé en L (40) et le profilé en U (42).

19. Procédé selon la revendication 17 ou 18, **caractérisé en ce que** plusieurs dispositifs de serrage (17) relient les deux parties de réservoir (12, 14) l'une à l'autre de manière étanche.
